# EUROPEAN PATENT SPECIFICATION

(11) **EP 0 708 586 B1**
(45) Date of publication and mention of the grant of the patent: **07.07.1999**
(21) Application number: 95307396.2
(22) Date of filing: 18.10.1995
(51) Int. Cl.: H05K 13/04, B65G 47/91

(54) **Method of enabling transportation of articles**
Verfahren zum Fördern von Artikeln
Méthode pour le transport d'articles

(30) Priority: 20.10.1994 GB 9421135
(43) Date of publication of application: 24.04.1996
(73) Proprietor: THOMAS & BETTS CORPORATION (a Tennessee Corporation), Memphis, Tennessee 38119 (US)
(72) Inventor: NG, Joey Kiat-Hup, Choa Chu Kang Avenue 3, Singapore 680282 (SG); NG, Kok Hong, Toa Payoh Lorong 2, Singapore 1231 (SG)
(74) Representative: Howick, Nicholas Keith

(56) References cited:
- EP-A- 0 633 634
- DE-A- 3 127 120
- DE-A- 3 710 184

## Description

The present invention relates to a method of enabling an article to be transported and an article to be transported in combination with a transportation element and finds particular application in the transportation of electrical connectors.

Such connectors are often required to be transported in various manufacturing processes in the electronics industry.

A typical method of transporting such electrical connectors is by means of a suction cup. However, this requires the electrical connector to have a sufficient planar surface area and suitable shape for the suction cup to function.

DE-A-3710184A discloses an arrangement where a non-planar or broken component surface is made suitable for co-operation with a suction device by using a film stuck to the component within its periphery. DE-A-3710184A discloses a method enabling an article to be transported by means of a transporting device operable in relation to a predetermined area of an article to be transported, attaching a transporting surface to the article, the surface having an area greater than the predetermined area, thereby permitting the transporting device to operate in relation to the surface, wherein the surface is attached to the article by means of adhesive. DE-A-3710184A does not contemplate the transporting surface having a larger peripheral boundary than the surface of the article being transported, and so is limited in its application.

DE-A-3127120 discloses a use of a film for supporting multiple components using adhesive, so that the relative location of component is assured as the film is transported around a path. This film is flexible.

EP-A-0633634A (an intermediate document) discloses use of a film attached by adhesive across passages in a connector housing to provide a surface for engagement by a suction device. As with DE-A-3710184A, however, the film lies within the periphery of the connector body.

This art leaves unaddressed the problem of handling small components, and this invention aims to solve this problem.

It has also been proposed to apply a pad to the electrical connector which is made from moulded plastics material and which has depending legs enabling the pad to be press-fitted on to the width of the connector base. The pad has a surface which is suitable to be engaged by a suction cup. The pad is removed manually after the electrical connector has been soldered into position. The necessary tight fit between the legs of the pad and the connector base renders this removal process tedious and time-consuming.

It would therefore be desirable to provide a means of enabling an article to be transported without such disadvantages.

In accordance with a first aspect of the present invention there is provided a method of enabling an article which lacks a sufficient planar surface area and suitable shape for a suction connection to function to be transported by a transporting device employing a suction connection wherein the transporting device includes an engagement expanse which has a larger peripheral boundary than the surface of the article presented for the suction connection, said method comprising attaching a planar transportation element to the article, said planar transportation element having two opposing sides whereby the first side attaches to the article by means of an adhesive and the opposing second side presents a surface area for suction connection which is greater than the engagement expanse of the transporting device, said planar transportation element further having a suitable rigidity to resist significant distortion during transportation of said article.

In accordance with a second aspect of the present invention there is provided an article to be transported in combination with a transportation element secured thereto, the article having a body portion with insufficient usable planar surface area to permit transportation by a transporting device employing a suction connection, the transportation element being planar and having a planar transportation surface for engagement by the suction connection and an oppositely facing planar securement surface secured to the article by adhesive, the planar transportation element extending beyond the body portion of the article to which the transportation element is secured such that a peripheral part of the planar transportation element extends outwardly beyond and not in contact with the body portion of the article, the planar transportation element having a suitable rigidity to resist significant distortion during transportation of the article.

The transportation element is advantageously a length of adhesive tape, and suitable rigidity of the tape may be provided by using a tape having a thickness of between 0.25 mm and 1.00 mm and preferably a thickness of substantially 0.25 mm.

A preferred embodiment of the invention will now be described with reference to the accompanying drawings, wherein:
Figure 1 is a cross-sectional representation in elevation of the preferred embodiment of the present invention;
Figure 2 is a plan view of the arrangement shown in Figure 1; and
Figure 3 is a cross-sectional view taken along the line 3'-3' shown in Figure 1.

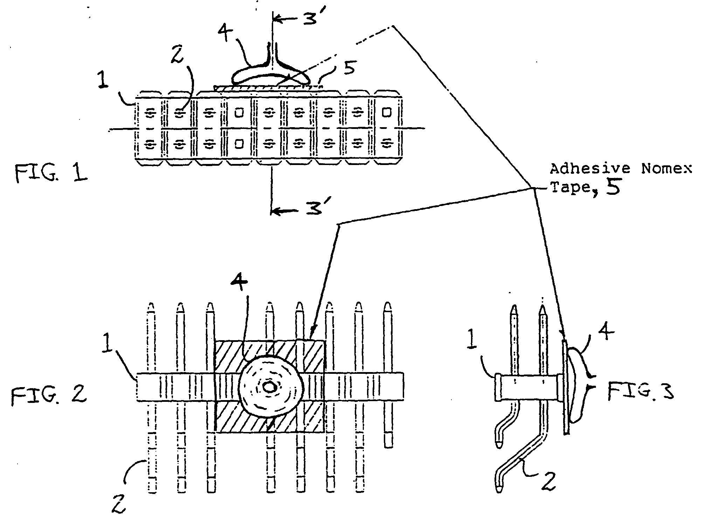

The electrical connector shown in the drawings is an SMT ("surface mount technology") connector and comprises a central connector base 1 to which are attached a plurality of electrical terminals 2. The terminals are arranged for attachment to conductive pads or traces on a printed circuit board, as opposed to comprising pins or posts which are received in openings in such boards. Transportation of the electrical connector is performed by means of a suction cup 4, and, from Figure 2, it can be seen that the outer diameter of the suction cup 4 is greater than the width of the connector base 1.

Consequently, the transportation element in the form of a length of adhesive tape 5 is attached to the connector base 1, the tape having a surface area which is sufficient to cover the area presented by the suction cup 4. The tape used in the preferred embodiment is an adhesive aramid-based tape, such as Nomex (R.T.M.) tape and is of sufficient rigidity to enable the electrical connector to be transported by the suction cup 4 without significantly bending or otherwise distorting. To achieve this rigidity, the tape thickness is between 0.25 mm and 1.00 mm, and advantageously substantially 0.25 mm.

Once the electrical connector has been transported by means of the suction cup 4 into a desired workstation, a desired operation, such as an infrared soldering process, is carried out on the electrical connector, and, once this has been effected, the adhesive tape 5 is then removed from the connector base 1. Nomex (R.T.M.) tape is advantageous in being electrically insulative and able to withstand the high temperatures encountered during such a soldering operation.

Alternatively, the adhesive tape could be a PTFE-based film, such as Teflon (R.T.M.) tape.

From the above, it will be appreciated that the invention provides a method of enabling transportation of an article having a relatively small surface area, in a cheap and simple manner and without the inconvenience of having to remove a device which frictionally grips the connector base.

## Claims

1. A method of enabling an article (1) which lacks a sufficient planar surface area and suitable shape for a suction connection to function to be transported by a transporting device employing a suction connection wherein the transporting device (4) includes an engagement expanse which has a larger peripheral boundary than the surface of the article presented for the suction connection, said method comprising attaching a planar transportation element to the article, said planar transportation element having two opposing sides whereby the first side attaches to the article (1) by means of an adhesive and the opposing second side presents a surface area for suction connection which is greater than the engagement expanse of the transporting device (4), said planar transportation element further having a suitable rigidity to resist significant distortion during transportation of said article (1).

2. A method as claimed in claim 1, wherein the transportation element is releasably attached to the article.

3. A method as claimed in claim 1 and claim 2, wherein the transportation element is a surface of a length of adhesive tape (5).

4. A method as claimed in claim 3, wherein the adhesive tape (5) is an aramid-based tape.

5. A method as claimed in claim 3, wherein the adhesive tape (5) is a PTFE-based tape.

6. A method as claimed in any one of claims 3 to 5, wherein only one side of the tape (5) is adhesive.

7. A method as claimed in any one of claims 3 to 6, wherein the tape (5) has a thickness of between 0.25 mm and 1.00 mm.

8. A method as claimed in any one of claims 3 to 6, wherein the tape (5) has a thickness of substantially 0.25 mm.

9. A method as claimed in any preceding claim, wherein the article (1) is an electrical connector.

10. An article (1) to be transported in combination with a transportation element (5) secured thereto, the article (1) having a body portion with insufficient usable planar surface area to permit transportation by a transporting device (4) employing a suction connection, the transportation element (5) being planar and having a planar transportation surface for engagement by the suction connection and an oppositely facing planar securement surface secured to the article (1) by adhesive, the planar transportation element extending beyond the body portion of the article (1) to which the transportation element is secured such that a peripheral part of the planar transportation element (5) extends outwardly beyond and not in contact with the body portion of the article (1), the planar transportation element (5) having a suitable rigidity to resist significant distortion during transportation of the article (1).

11. A combination as claimed in claim 10 wherein the transportation element (5) is an adhesive tape (5) has a thickness of between 0.25 mm and 1.00 mm.

12. A combination as claimed in claim 11 wherein the tape has a thickness of substantially 0.25 mm.

## Patentansprüche

1. Ein Verfahren zum Ermöglichen des Förderns eines Gegenstandes (1), der eine für die Funktion einer Saugverbindung zum Fördern durch eine Fördervorrichtung ausreichende ebene Oberfläche und geeignete Form nicht aufweist, mit Verwendung einer Saugverbindung, wobei die Fördervorrichtung (4) eine Anlagefläche aufweist, die eine größere in Umfangsrichtung verlaufende Grenzlinie als die Oberfläche des der Saugverbindung angebotenen Gegenstandes aufweist, wobei das Verfahren das Befestigen eines eine ebene Fläche aufweisenden Förderelementes am Gegenstand einschließt, das die ebene Fläche aufweisende Förderelement zwei einander gegenüberliegende Seiten aufweist, die erste Seite unter Verwendung eines Klebstoffs am Gegenstand (1) anhaftet und die gegenüberliegende, zweite Seite für die Saugverbindung eine Oberfläche aufweist, die größer als die Anlagefläche der Fördervorrichtung (4) ist, und das die ebene Oberfläche aufweisende Förderlement weiter eine geeignete Biegefestigkeit aufweist, um während des Förderns des Gegenstandes (1) einer wesentlichen Verformung zu widerstehen.

2. Ein Verfahren wie in Anspruch 1 beansprucht, wobei das Förderelement am Gegenstand lösbar befestigt ist.

3. Ein Verfahren wie in Anspruch 1 und Anspruch 2 beansprucht, wobei das Förderelement eine Oberfläche eines Stücks Klebeband (5) ist.

4. Ein Verfahren nach Anspruch 3, wobei das Klebeband (5) ein Band auf der Grundlage von Aramid ist.

5. Ein Verfahren nach Anspruch 3, wobei das Klebeband (5) ein Band auf der Grundlage von PTFE ist.

6. Ein Verfahren wie in irgendeinem der Ansprüche 3 bis 5 beansprucht, wobei nur eine Seite des Bandes (5) klebend ist.

7. Ein Verfahren wie in irgendeinem der Ansprüche 3 bis 6 beansprucht, wobei das Band (5) eine Stärke zwischen 0,25 mm und 1,00 mm aufweist.

8. Ein Verfahren wie in irgendeinem der Ansprüche 3 bis 6 beansprucht, wobei das Band (5) eine Stärke von im wesentlichen 0,25 mm aufweist.

9. Ein Verfahren wie in irgendeinem vorhergehenden Anspruche beansprucht, wobei der Gegenstand (1) ein elektrischer Verbinder ist.

10. Ein in Kombination mit einem an ihm befestigten Förderelement (5) zu befördernder Gegenstand (1) mit einem Hauptabschnitt mit einer zum Ermöglichen des Förderns mit einer eine Saugverbindung verwendenden Fördervorrichtung (4) unzureichend brauchbaren ebenen Oberfläche, wobei das Förderelement (5) eben ist und eine ebene Förderoberfläche zum Erfassen durch die Saugverbindung und eine zur anderen Seite zeigende, an dem Gegenstand (1) mit Klebstoff befestigte ebene Befestigungsoberfläche aufweist, wobei das ebene Förderelement über den Hauptabschnitt des Gegenstandes (1) hinausragt, an dem das Förderelement derart befestigt ist, daß ein Umfangsteil des ebenen Förderelementes (5) über den Hauptabschnitt des Gegenstandes (1) nach außen übersteht und mit dem Hauptabschnitt nicht in Berührung liegt und das ebene Förderlement (5) eine geeignete Biegefestigkeit aufweist, um während des Förderns des Gegenstandes (1) einer wesentlichen Verformung zu widerstehen.

11. Eine Kombination wie in Anspruch 10 beansprucht, wobei das Förderelement (5) ein Klebeband (5) mit einer Stärke zwischen 0,25 mm und 1,00 mm ist.

12. Eine Kombination wie in Anspruch 11 beansprucht, wobei das Band eine Stärke von im wesentlichen 0,25 mm aufweist.

## Revendications

1. Procédé destiné à permettre à un article (1) qui est dépourvu d'une aire de surface plane suffisante et d'une forme appropriée en vue d'une fixation par aspiration, de fonctionner de façon à être transporté par un dispositif de transport utilisant une fixation par aspiration, dans lequel le dispositif de transport (4) comprend une étendue de venue en contact qui présente une limite périphérique plus grande que la surface de l'article présenté en vue d'une fixation par aspiration, ledit procédé comprenant la fixation d'un élément de transport plan à l'article, ledit élément de transport plan présentant deux faces opposées, grâce à quoi la première face se fixe à l'article (1) au moyen d'un adhésif et la seconde face opposée présente d'une aire de surface en vue d'une fixation par aspiration qui est plus grande que l'étendue de venue en contact du dispositif de transport (4), ledit élément de transport plan présentant en outre une rigidité appropriée afin de résister à une déformation importante pendant le transport dudit article (1).

2. Procédé selon la revendication 1, dans lequel l'élément de transport est fixé de façon amovible à l'article.

3. Procédé selon la revendication 1 et la revendication 2, dans lequel l'élément de transport est une surface d'une certaine longueur de ruban adhésif (5).

4. Procédé selon la revendication 3, dans lequel le ruban adhésif (5) est un ruban à base d'aramide.

5. Procédé selon la revendication 3, dans lequel le ruban adhésif (5) est un ruban à base de PTFE.

6. Procédé selon l'une quelconque des revendications 3 à 5, dans lequel seule une face du ruban (5) est adhésive.

7. Procédé selon l'une quelconque des revendications 3 à 6, dans lequel le ruban (5) présente une épaisseur comprise entre 0.25 mm et 1.00 mm.

8. Procédé selon l'une quelconque des revendications 3 à 6, dans lequel le ruban (5) présente une épaisseur de pratiquement 0.25 mm.

9. Procédé selon l'une quelconque des revendications précédentes, dans lequel l'article (1) est un connecteur électrique.

10. Article (1) destiné à être transporté en combinaison avec un élément de transport (5) fixé à celui-ci, l'article (1)comportant une partie de corps présentant une aire de surface plane utilisable insuffisante pour permettre un transport par un dispositif de transport (4) utilisant une fixation par aspiration, l'élément de transport (5) étant plan et présentant une surface de transport plane destinée à être saisie par la fixation par aspiration, et une surface de fixation plane orientée à l'opposé fixée à l'article (1) par de l'adhésif, l'élément de transport plan s'étendant au-delà de la partie de corps de l'article (1) à laquelle l'élément de transport est fixé de sorte qu'une partie périphérique de l'élément de transport plan (5) s'étend vers l'extérieur au-delà de la partie de corps de l'article (1) et n'est pas en contact avec celle-ci, l'élément de transport plan (5) présentant une rigidité appropriée afin de résister à une déformation importante pendant le transport de l'article (1).

11. Combinaison selon la revendication 10, dans laquelle l'élément de transport (5) est un ruban adhésif (5) présentant une épaisseur comprise entre 0,25 mm et 1,00 mm.

12. Combinaison selon la revendication 11, dans laquelle le ruban présente une épaisseur de pratiquement 0,25 mm.
